# FASCICULE DE BREVET EUROPEEN

(11) **EP 1 713 740 B1**
(45) Date de publication et mention de la délivrance du brevet: **12.04.2017**
(21) Numéro de dépôt: 05717623.2
(22) Date de dépôt: 11.02.2005
(51) Int. Cl.: C04B 28/02, C04B 111/80, C04B 14/28

(54) **BETON ULTRA HAUTE PERFORMANCE ET AUTOPLACANT, SON PROCEDE DE PREPARATION ET SON UTILISATION**
SELBSTKOMPAKTIERENDER ULTRAHOCHLEISTUNGSBETON, HERSTELLUNGSVERFAHREN DAFÜR UND VERWENDUNG DAVON
ULTRA-HIGH-PERFORMANCE, SELF-COMPACTING CONCRETE, PREPARATION METHOD THEREOF AND USE OF SAME

(30) Priorité: 13.02.2004 FR 0401492
(43) Date de publication de la demande: 25.10.2006
(73) Titulaire: EIFFAGE GENIE CIVIL, 78140 VELIZY VILLACOUBLAY (FR)
(72) Inventeur: CHANUT, Sandrine, 94120 Fonteny Sous Bois (FR); THIBAUX, Thierry, F-94130 Nogent-sur-Marne (FR)
(74) Mandataire: Cabinet Plasseraud
(86) Numéro de dépôt international: PCT/FR2005/000334
(87) Numéro de publication internationale: WO 2005/077857

(56) Documents cités:
- EP-A- 0 934 915
- WO-A-01/51427
- WO-A-90/13524
- WO-A-93/21122
- US-A- 4 588 443
- US-B1- 6 402 831
- PATENT ABSTRACTS OF JAPAN vol. 2000, no. 11, 3 janvier 2001 (2001-01-03) & JP 2000 211956 A (MITSUBISHI MATERIALS CORP), 2 août 2000 (2000-08-02)
- ELKEM MATERIALS- PRODUCT SPECIFICATION, [Online] décembre 2002 (2002-12), XP002347563 Extrait de l'Internet: URL:http://www.refractories.elkem.com/hits /web_0006.nsf/Files/Product-Datasheets-Ref ractories-MS/$file/Elkem_Microsilica_Grade _983.pdf> [extrait le 2005-09-30]
- ELKEM MATERIALS- PRODUCT SPECIFICATION, [Online] février 2000 (2000-02), XP002347564 Extrait de l'Internet: URL:http://www.refractories.elkem.com/hits /web_0006.nsf/Files/Product-Datasheets-Ref ractories-MS/$file/Elkem_Microsilica_Grade _940.pdf> [extrait le 2005-09-30]
- "White Concrete for Aggressive Environment"[Online] septembre 2003 (2003-09), XP002347565 Extrait de l'Internet: URL:http://www.aalborgwhite.com/media/info _aggressive_environment.pdf> [extrait le 2005-09-30]

## Description

La présente invention a pour objet un béton ultra haute performance et autoplaçant non traité thermiquement ainsi que le procédé de préparation et les utilisations de ce béton.

Dans la présente invention, on entend par « béton » un corps de matrice cimentaire pouvant, selon les ouvrages à réaliser, inclure des fibres, et étant obtenu par durcissement d'une composition cimentaire mélangée à l'eau.

Dans la présente invention, on entend par « béton ultra haute performance » un béton présentant une résistance caractéristique à la compression à 28 jours égale ou supérieure à 150 MPa, cette valeur étant donnée pour un béton conservé et maintenu à 20°C, qui n'a pas subi de cure ou de traitement thermique.

Dans la présente invention, on entend par « béton autoplaçant » un béton très fluide homogène et stable, se mettant en oeuvre sans vibration.

Des bétons très haute performance sont connus de l'homme du métier, par exemple dans le brevet US4 588 443 et la demande de brevet EP 0 934 915.

Ainsi, la demande de brevet européen EP 0 934 915 A1 décrit un béton très haute performance et autonivelant, contenant notamment du ciment, un mélange de sables de bauxites calcinées de différentes granulométries, de la fumée de silice, des adjuvants tels qu'un agent anti-mousse et un agent superplastifiant réducteur d'eau, éventuellement des fibres et de l'eau. De tels bétons présentent des propriétés mécaniques élevées, en particulier une résistance caractéristique à la compression à 28 jours d'au moins 150 MPa, un module d'élasticité à 28 jours d'au moins 60 GPa, et une résistance à la compression à 50 heures d'au moins 100 MPa, ces valeurs étant données pour un béton conservé et maintenu à 20°C.

Cependant, malgré des performances intéressantes en terme de propriétés mécaniques, ces bétons présentent une teinte généralement grise, liée à la présence de fumée de silice dans leur composition. Or, une teinte grise n'est pas toujours souhaitable, notamment dans certaines applications comme par exemple les bétons architectoniques pour lesquels une teinte claire, voire quasi blanche, est souhaitée.

Il subsiste donc à l'heure actuelle le besoin de disposer de bétons de teinte claire, qui présentent également de bonnes propriétés mécaniques.

La demanderesse a réussi à développer un béton ultra haute performance de teinte claire en remplaçant la fumée de silice par des particules ultrafines de carbonate de calcium ayant une surface spécifique d'au moins 10 m² /g et un indice de forme IF d'au moins 0,3, de préférence 0,4.

Par « indice de forme » IF d'un ensemble de particules, on entend, au sens de la présente invention, le rapport de la somme des épaisseurs ∑E des particules (E étant l'épaisseur d'une particule) sur la somme des longueurs ∑L de ces même particules (L étant la longueur d'une particule), dans un échantillon de plusieurs centaines de particules. L'indice de forme IF est défini par la relation IF = ∑E/∑L.

Etant donné que le diamètre moyen des particules ultra-fines de carbonate de calcium est de l'ordre 70 nm, le coefficient de forme sera déterminé à partir de l'observation des particules et de la mesure de leurs dimensions à l'aide d'un microscope électronique à balayage (MEB) à effet de champ. On procède de la manière suivante :
- prélèvement dans un lot de fabrication de particules ultrafines de carbonate de calcium d'échantillons comprenant environ une centaine de particules chacun,
- préparation des échantillons pour une observation au MEB par métallisation des particules puis fixation des particules métallisées au porte-échantillons,
- observation au MEB des échantillons,
- mesure de la plus petite et de la plus grande dimension de chaque grain à l'aide de la platine porte-objet, la plus petite dimension constituant l'épaisseur E de la particule, et la plus grande dimension constituant la longueur L de cette particule, et calcul de l'indice de forme IF pour chaque échantillon,
- calcul de la moyenne de l'indice de forme sur l'ensemble des échantillons examinés.

L'indice de forme IF d'un ensemble de particules sphériques est égal à 1, et celui d'un ensemble de particules cubiques est d'environ de l'ordre de 0,58.

Le "diamètre" moyen d'un grain désigne le diamètre de la plus petite sphère dans laquelle ledit grain peut être inclus.

Si l'on souhaite un béton ultra haute performance de teinte très claire, voire quasi-blanche, il est possible de remplacer complètement la fumée de silice par les particules ultrafines de carbonate de calcium.

L'invention a donc pour objet un béton ultra haute performance et autoplaçant, dans lequel la fumée de silice a été complètement remplacée par des particules ultrafines de carbonate de calcium. Un tel béton comprend :
- un ciment,
- un mélange de sables de bauxites calcinées de différentes granulométries, le sable le plus fin ayant une granulométrie moyenne inférieure à 1 mm et le sable le plus grossier ayant une granulométrie moyenne inférieure à 10 mm,
- des particules ultrafines de carbonate de calcium, présentant une surface spécifique égale ou supérieure à 10 m²/g, de préférence égale ou supérieure à 15 m²/g, et mieux de l'ordre de 20 m²/g, ainsi qu'un indice de forme IF égal ou supérieur à 0,3, de préférence égal ou supérieur à 0,4,
- un agent anti-mousse,
- un superplastifiant réducteur d'eau,
- éventuellement des fibres,
- et de l'eau,
les ciments, les sables, les particules ultrafines de carbonate de calcium présentant une répartition granulométrique telle que l'on ait au moins trois et au plus cinq classes granulométriques différentes, le rapport entre le diamètre moyen d'une classe granulométrique et celui de la classe immédiatement supérieure étant d'environ 10.

Comme particules ultrafines de carbonate de calcium, on utilise de préférence des particules ultrafines de carbonate de calcium cristallisé sous forme de petits cubes. Cette forme contribue à rendre le béton très fluide à l'état frais, ces particules de carbonate de calcium pouvant s'insérer facilement entre les grains de ciment et les grains de sable.

Le ciment mis en oeuvre dans la présente invention est de préférence un ciment blanc. Il peut être choisi parmi les ciments de type Portland CEM 1,ayant des caractéristiques complémentaires telles que « Prise mer-PM » ou encore mieux « Prise mer et résistant aux sulfates- PM-ES » ou leurs mélanges.

Par « ciment blanc », on entend au sens de la présente invention un ciment de teinte essentiellement blanche, dont la composition comprend des matières premières très pures telles que le calcaire et le kaolin, et qui est essentiellement exempt de toutes traces d'oxyde de fer.

A titre d'exemple de ciment blanc utilisable dans le béton de l'invention, on peut citer le ciment blanc CPA 52,5 du Teil commercialisé par LAFARGE.

Par "mélange de sables de bauxites calcinées", on entend, au sens de la présente invention, non seulement un mélange de sables de bauxites calcinées de différentes granulométries, mais également un mélange comprenant du sable de bauxite calcinée avec des granulats présentant de très grandes résistance et dureté tels que, notamment des granulats de corindon, d'émeri ou des résidus de métallurgie tels que du carbure de silicium, ou bien avec un autre type de sable, et de préférence un sable calcaire car il présente une teinte claire.

Dans la présente invention on utilise de préférence un mélange de deux ou trois sables de bauxite calcinée de différentes granulométries.

Selon un mode de réalisation particulier de l'invention, ce mélange de sables est constitué par :
- un sable de granulométrie moyenne inférieure à 1 mm comprenant 20 % de granulats de dimension inférieure à 80 microns,
- un sable de granulométrie comprise entre 3 et 7 mm, et
- éventuellement un sable de granulométrie comprise entre 1 et 3 mm.

Le sable de plus petite granulométrie peut être remplacé en totalité ou partiellement par :
- du ciment, des additions minérales telles que du laitier broyé, des cendres volantes ou encore du filler de bauxite calcinée dont le diamètre moyen est voisin de celui du ciment, pour ce qui est de la fraction de 20 % de granulats de dimension inférieure à 80 µm, et
- du sable de granulométrie supérieure à 1 mm (par exemple 3 à 7 mm) pour ce qui est de l'autre fraction.

De façon à éviter l'inclusion de bulles d'air qui diminueraient la résistance du béton, on utilise un agent anti-mousse utilisé classiquement pour les forages pétroliers, c'est-à-dire dans des applications nécessitant un réglage très précis de la densité du matériau coulé. Ces agents anti-mousses sont appelés « defoamer and deaerator admixtures ». Ces agents se présentent sous forme sèche ou sous forme liquide. A titre d'exemple d'agents anti-mousse utilisables dans le béton selon l'invention, on peut citer notamment les mélanges d'alcool dodécylique et de polypropylène glycol, les dibulylphtalates, les dibutylphosphates, les polymères de silicone tels que le polydiméthylsiloxane, et les silicates modifiés.

Selon un mode de réalisation particulier de l'invention, on utilise comme agent anti-mousse un silicate traité avec un glycol polymérisé commercialisé par la Société TROY CHEMICAL CORPORATION sous la marque TROYKYD® D126.

Comme superplastifiant réducteur d'eau, on utilise de préférence un superplastifiant réducteur d'eau de type éther polycarboxylique modifié, tel que le GLENIUM® 51 commercialisé par la Société MBT France, ou un superplastifiant réducteur d'eau de type copolymère acrylique vinylique de synthèse tel que le superplastifiant VISCOCRETE 5400F commercialisé par la Société SIKA France, ou encore un superplastifiant réducteur d'eau sous forme de solution aqueuse de polycarboxylates modifiés tel que le VISCOCRETE 20HE, également commercialisé par la société SIKA France.

A titre complémentaire, lorsque la teneur globale en alcalins dans le béton est trop élevée (si la nature des granulats ou encore la quantité de fumée de silice est supérieure à 10 % de la masse du ciment), il est possible de la réduire, par exemple en neutralisant les alcalins qui sont contenus dans les fluidifiants. La neutralisation des fluidifiants pourra être choisie à base calcique plutôt que sodique.

Pour augmenter les caractéristiques du béton selon l'invention, dans certains ouvrages, des fibres sont incorporées dans le béton. Ces fibres peuvent être synthétiques organiques, minérales ou métalliques. Elle peuvent notamment être choisies parmi les fibres en homopolymère ou copolymère de polyéthylène, polypropylène, polyamide, polyvinylalcool, les fibres de carbone, de Kevlar®, et les fibres en acier.

Ces fibres peuvent avoir des formes quelconques. Cependant afin d'obtenir une bonne maniabilité du béton, on préfère utiliser des fibres droites.

Ces fibres ont un diamètre compris entre 0,1 et 1,0 mm, de préférence entre 0,2 et 0,5 mm, et plus préférentiellement encore de l'ordre de 0,3 mm, et une longueur comprise entre 5 et 30 mm, de préférence entre 10 et 25 mm, et plus préférentiellement encore de l'ordre de 10 et 20 mm.

Lorsque l'on introduit des fibres, la matrice granulaire est modifiée. En effet, les fibres devant être enrobées, il est donc nécessaire que la quantité des fines, c'est-à-dire des particules de dimension inférieure à 0,1 mm, augmente. La quantité de particules ultrafines de carbonate de calcium, de ciment, de sable de plus petite granulométrie et/ou d'additions minérales est donc supérieure à celle d'un béton sans fibres. En outre, des essais ont montré que l'on obtenait de meilleurs résultats en terme de résistance à la traction avec une quantité de fibres représentant environ 2 à 3 % du volume, soit environ 15 à 24 parties en poids par rapport au poids total du béton.

Si l'on souhaite obtenir un béton de teinte claire, tout en conservant une résistance caractéristique à la compression à 28 jours élevée, les meilleurs résultats sont obtenus avec un béton selon l'invention complètement exempt de fumée de silice, qui comprend, en parties en poids :
- 100 de ciment,
- 80 à 150, de préférence 100 à 125 de mélanges de sables de bauxites calcinées, de différentes granulométries, le sable le plus fin ayant une granulométrie moyenne inférieure à 1 mm, et le sable le plus grossier ayant une granulométrie moyenne inférieure à 10 mm ;
- 10 à 20, de préférence 13 à 17 de particules ultrafines de carbonate de calcium ;
- 0,2 à 5, de préférence 0,5 à 0,7 d'agent anti-mousse ;
- 5 à 7 de superplastifiant réducteur d'eau ;
- 17 à 20 de fibres ; et
- 10 à 20, de préférence 16 à 20 d'eau.

Par ailleurs, on peut ajouter dans la composition de béton selon l'invention de 0,5 à 3 parties, de préférence de 0,5 à 2 parties, et plus préférentiellement encore 1 partie d'oxyde de calcium ou de sulfate de calcium. L'oxyde de calcium ou le sulfate de calcium est ajouté sous forme pulvérulente ou micronisée et doit permettre de compenser le retrait endogène inhérent aux formulations à base de liants hydrauliques associées à de très faibles quantités d'eau. Il est également possible d'utiliser des fillers de bauxite calcinée (dont le diamètre harmonique moyen est inférieure à 80 µm) en substitution partielle du ciment, des particules ultrafines de carbonate de calcium et, le cas échéant, et de la fumée de silice.

De plus, on peut également ajouter dans la composition de béton selon l'invention de 0,3.10⁻³ à 1,15.10⁻³ parties en poids par rapport au poids total du béton hors fibres de renforcement, de fibres polypropylène pour améliore la résistance au feu du béton selon l'invention.

Les quantités des différents constituants du béton sont ajustables par l'homme du métier en fonction de l'utilisation et des propriétés souhaitées du béton.

Plus la proportion dans un béton de particules ultrafines de carbonate de calcium par rapport à la fumée de silice est importante, plus la teinte de ce béton est claire. Ainsi, dans le cas d'une substitution complète de la fumée de silice par les particules ultrafines de calcaire, et de l'utilisation d'un ciment blanc, on obtient alors un béton de teinte quasi blanche. Par contre, si l'on ne souhaite pas obtenir un béton très lumineux, de teinte vraiment blanche, il n'est pas nécessaire de substituer complètement la fumée de silice par les particules ultrafines calcaires. Dans ce cas, le béton présente une résistance caractéristique à la compression à 28 jours plus élevée que celle d'un béton ne comprenant pas de fumée de silice.

L'invention a également pour objet un procédé de préparation du béton.

Selon un premier mode de réalisation de l'invention, on introduit dans un malaxeur tous les constituants du béton selon l'invention, on malaxe et on obtient un béton prêt à mouler ou à couler qui présente une très bonne maniabilité.

Selon un autre mode de réalisation, on mélange tout d'abord toutes les matières granulaires sèches, c'est-à-dire le ciment, les sables, les particules ultrafines calcaires et éventuellement le superplastifiant et l'agent anti-mousse puis, on introduit dans un malaxeur ce prémélange auquel on ajoute l'eau, le superplastifiant et l'agent anti-mousse, si ceux-ci sont sous forme liquide, et les fibres si besoin est.

De façon préférée, on prépare tout d'abord le mélange des poudres, puis, au moment de l'utilisation, on malaxe les poudres avec les quantités souhaitées de fibres et d'eau, éventuellement de superplastifiant réducteur d'eau, et d'agent anti-mousse dans la mesure où ceux-ci sont sous forme liquide. Ainsi, de façon avantageuse, on prépare des sacs ou autre types d'emballage (par exemple "big bag") de produit prémélangé à sec prêt à l'emploi, qui se conservent et se stockent facilement étant donné qu'ils ont une très faible teneur en eau. Au moment de l'utilisation il suffit donc de verser dans un malaxeur ce produit prémélangé prêt à l'emploi avec les quantités souhaitées de fibres et d'eau, et éventuellement de superplastifiant réducteur d'eau. Après malaxage, par exemple pendant 4 à 16 minutes, le béton selon l'invention obtenu peut être moulé sans difficulté, étant donné ses très hautes performances d'étalement.

Pour réaliser le moulage, on peut utiliser des moules classiques, en bois, métal, etc., ou des moules calorifugés qui ont pour seul but de permettre une diminution du temps de prise et une montée plus rapide en résistance. Le béton selon l'invention n'a nullement besoin de subir un traitement thermique pour atteindre les performances requises. Bien entendu, un traitement thermique pourrait être envisagé pour améliorer encore les performances mais ceci entraînerait un surcoût.

La présente invention porte également sur les produits prémélangés à sec prêts à l'emploi.

Le béton selon l'invention peut être utilisé dans tous les domaines d'application des bétons armés ou non.

Plus particulièrement, compte tenu du fait que ce béton est autoplaçant, il peut être coulé en place pour la réalisation de poteaux, poutrelles, poutres, planchers, etc. Il peut également être utilisé dans toutes les applications de préfabrication. Compte tenu de ses caractéristiques de cohésion et de viscosité, il peut être utilisé pour des coffrages comprenant des inserts. Il peut également être utilisé pour réaliser des clavages entre les éléments de structure. Il peut en outre être utilisé pour la réalisation de dallages, d'ouvrages d'art, de pièces précontraintes ou de matériaux composites.

Par ailleurs, sa résistance à la compression élevée permet une diminution du dimensionnement d'ouvrages le mettant en oeuvre. Ainsi, le béton selon l'invention serait particulièrement utile par exemple pour tous les éléments, fûts, tubes, containers, utilisés pour l'assainissement. Il présente également un très faible coefficient de frottement qui n'est pas modifié au cours du temps ce qui le rend tout à fait approprié au transport de matières classiquement corrosives pour le béton.

Enfin, les bétons selon l'invention présentant une teneur nulle en fumée de silice peuvent être utilisés dans toutes les applications architectoniques, en raison de leur teinte claire qui est particulièrement recherchée pour de telles applications, et de leurs bonnes propriétés mécaniques, notamment une résistance à la compression élevée.

La présente invention va être expliquée plus en détail à l'aide de l'exemple unique suivant, qui n'est pas limitatif. Les quantités sont indiquées en parties en poids sauf indication contraire.

### EXEMPLE

On a préparé une formulation de béton selon l'invention, dont la composition est reprise dans le tableau 1.

### Matières premières

- le ciment utilisé est un ciment blanc CPA 52,5 blanc le Teil commercialisé par Lafarge ;
- le mélange de sables de bauxites utilisé est un mélange d'un sable de bauxite granulométrie inférieure à 1mm, et d'un sable de bauxite de granulométrie comprise entre 3 et 7 mm ;
- les particules ultrafines de carbonate de calcium sont des additions ultrafines de carbonate de calcium synthétique cristallisé sous la forme de cubes et commercialisé par SOLVAY sous la marque SOCAL® 31 ;
- les fibres utilisées sont des fibres droites en acier, de 0,3 mm de diamètre et 20 mm de longueur ;
- le superplastifiant réducteur d'eau est commercialisé par la Société SIKA France sous la dénomination commerciale VISCOCRETE 5400 F ;
- l'agent antimousse utilisé est un agent antimousse commercialisé par la société TROY sous la marque TROYKYD® D 126.
- l'eau de gâchage est présente en une quantité telle que le ratio eau/ciment E/C est fixé à 0,225.

**TABLEAU 1**

| **MATIERES PREMIERES** | **QUANTITE** |
|---|---|
| Ciment | 1015 |
| Particules ultrafines de carbonate de calcium | 152 |
| Sable de bauxite calcinée de granulométrie moyenne inférieure à 1 mm | 775 |
| Sable de bauxite calcinée de granulométrie comprise entre 3 et 7 mm | 373 |
| Fibres métalliques | 197 |
| Superplastifiant réducteur d'eau | 63,8 |
| Agent antimousse | 6 |
| Eau | 184 |

Avec cette formulation, on a préparé des éprouvettes cylindriques de 11 × 22 cm sur lesquelles on a réalisé des essais normalisés de mesure de la résistance à la compression à 28 jours selon la norme NFP 18406.

On obtient un béton de teinte très claire, qui présente une résistance moyenne à la compression d'au moins 165 MPa et une résistance caractéristique à la compression à 28 jours d'au moins 150 MPa.

**TABLEAU 1**

| **MATIERES PREMIERES** | **QUANTITE** |
|---|---|
| Ciment | 1015 |
| Particules ultrafines de carbonate de calcium | 152 |
| Sable de bauxite calcinée de granulométrie moyenne inférieure à 1 mm | 775 |
| Sable de bauxite calcinée de granulométrie comprise entre 3 et 7 mm | 373 |
| Fibres métalliques | 197 |
| Superplastifiant réducteur d'eau | 63,8 |
| Agent antimousse | 6 |
| Eau | 184 |

Avec cette formulation, on a préparé des éprouvettes cylindriques de 11 × 22 cm sur lesquelles on a réalisé des essais normalisés de mesure de la résistance à la compression à 28 jours selon la norme NFP 18406.

On obtient un béton de teinte très claire, qui présente une résistance moyenne à la compression d'au moins 165 MPa et une résistance caractéristique à la compression à 28 jours d'au moins 150 MPa.

## Revendications

1. Béton très haute performance et autoplaçant, présentant une résistance à la compression à 28 jours d'au moins 150 MPa, cette valeur étant donnée pour un béton conservé et maintenu à 20°C comprenant :
- un ciment,
- un mélange de sables de bauxites calcinées de différentes granulométries, le sable le plus fin ayant une granulométrie moyenne inférieure à 1 mm et le sable le plus grossier ayant une granulométrie moyenne inférieure à 10 mm,
- des particules ultrafines de carbonate de calcium, présentant une surface spécifique égale ou supérieure à 10m²/g, de préférence égale ou supérieure à 15 m²/g, et mieux de l'ordre de 20 m²/g, ainsi qu'un indice de forme IF égal ou supérieur à 0,3, de préférence égal ou supérieur à 0,4,
- un agent anti-mousse,
- un superplastifiant réducteur d'eau,
- éventuellement des fibres,
- et de l'eau,
les ciments, les sables, les particules ultrafines de carbonate de calcium présentant une répartition granulométrique telle que l'on ait au moins trois et au plus cinq classes granulométriques différentes, le rapport entre le diamètre moyen d'une classe granulométrique et celui de la classe immédiatement supérieure étant d'environ 10.

2. Béton selon la revendication 1, **caractérisé en ce que** les particules ultrafines de carbonate de calcium sont des additions ultrafines de carbonate de calcium cristallisé sous forme de petits cubes.

3. Béton selon l'une quelconque des revendications précédentes, **caractérisé en ce que** le ciment est un ciment blanc.

4. Béton selon l'une quelconque des revendications précédentes, **caractérisé en ce que** le mélange de sables de bauxites calcinées est constitué par :
- un sable de granulométrie moyenne inférieure à 1 mm comprenant 20 % de granulats de dimension inférieure à 80 microns,
- un sable de granulométrie comprise entre 3 et 7 mm, et
- éventuellement un sable de granulométrie comprise entre 1 et 3 mm,
le sable de plus petite granulométrie pouvant être remplacé en totalité ou partiellement par :
- du ciment, des additions minérales telles que du laitier broyé, des cendres volantes ou du filler de bauxite calcinée dont le diamètre moyen est inférieur à 80 µm, pour ce qui est de la fraction de 20 % des granulats de dimension inférieure à 80 µm,
- et du sable de granulométrie supérieure à 1 mm, pour ce qui est de l'autre fraction.

5. Béton selon l'une quelconque des revendications précédentes, **caractérisé par le fait que** les fibres sont choisies parmi les fibres métalliques, synthétiques, organiques ou minérales et leurs mélanges, de préférence parmi les fibres en homopolymère ou copolymère de polyéthylène, polypropylènepolyamide, polyvinylalcool, les fibres de carbone, de Kevlar®, et les fibres en acier.

6. Béton selon la revendication 5, **caractérisé par le fait que** les fibres sont des fibres métalliques, de préférence en acier, de longueur comprise entre 5 et 30 mm, de préférence entre 10 et 25 mm, et plus préférentiellement encore de l'ordre de 20 mm, et de diamètre compris entre 0,1 et 1,0 mm, de préférence entre 0,2 et 0,5 mm, et plus préférentiellement encore de l'ordre de 0,3 mm.

7. Béton selon l'une quelconque des revendications 1 à 4, qui est exempt de fumée de silice, et qui comprend, en parties en poids :
- 100 de ciment,
- 80 à 150, de préférence 100 à 125 de mélanges de sables de bauxites calcinées, de différentes granulométries, le sable le plus fin ayant une granulométrie moyenne inférieure à 1 mm, et le sable le plus grossier ayant une granulométrie moyenne inférieure à 10 mm ;
- 10 à 20, de préférence 13 à 17 de particules ultrafines de carbonate de calcium ;
- 0,2 à 5, de préférence 0,5 à 0,7 d'agent anti-mousse ;
- 5 à 7 de superplastifiant réducteur d'eau ;
- 17 à 20 de fibres ; et
- 10 à 20, de préférence 16 à 20 d'eau.

8. Procédé de préparation d'un béton très haute performance et autoplaçant selon l'une quelconque des revendications 1 à 7, **caractérisé par le fait que** l'on malaxe tous les constituants du béton jusqu'à l'obtention d'un béton de fluidité souhaitée ou que l'on mélange tout d'abord les constituants granulaires secs, tels que le ciment, les sables, les particules ultrafines de carbonate de calcium, et éventuellement le superplastifiant et l'agent anti-mousse, puis que l'on ajoute à ce mélange l'eau, et éventuellement le superplastifiant et l'agent anti-mousse si ceux-ci sont sous forme liquide, et éventuellement les fibres, et que l'on malaxe jusqu'à l'obtention d'un béton ayant la fluidité souhaitée.

9. Mélange à sec de béton prêt à l'emploi permettant d'obtenir, après ajout d'eau et éventuellement de fibres ainsi que de superplastifiant réducteur d'eau et d'agent anti-mousse si ceux-ci sont sous forme liquide, un béton selon l'une quelconque des revendications 1 à 7.

10. Utilisation d'un béton tel que défini selon l'une quelconque des revendications 1 à 7 ou tel que préparé selon le procédé de la revendication 8 pour la réalisation d'éléments préfabriqués tels que des poteaux, poutrelles, poutres, planchers, dallages, d'ouvrages d'art, de pièces précontraintes ou de matériaux composites, de clavages entre éléments de structure, d'éléments de circuit d'assainissement, ou pour des applications architectoniques.

## Patentansprüche

1. Selbstverdichtender Ultrahochleistungsbeton mit einer Druckfestigkeit nach 28 Tagen von mindestens 150 MPa, wobei dieser Wert bestimmt wird für einen Beton, der bei 20° C gelagert und gehalten wurde, umfassend:
- einen Zement,
- ein Gemisch aus kalzinierten Bauxitsanden mit verschiedenen Korngrößen, wobei der feinste Sand eine mittlere Korngröße von weniger als 1 mm und der grobkörnigste Sand eine mittlere Korngröße von weniger als 10 mm aufweist,
- ultrafeine Teilchen aus Calciumcarbonat mit einer spezifischen Oberfläche von gleich oder größer 10 m²/g, vorzugsweise gleich oder größer 15 m²/g und mehr bevorzugt in der Größenordnung von 20 m²/g, und einem Aspektverhältnis AV von gleich oder größer 0,3, vorzugsweise gleich oder größer 0,4,
- ein Antischaummittel,
- einen Hochleistungsverflüssiger zur Verringerung von Wasser,
- gegebenenfalls Fasern,
- und Wasser,
wobei die Zemente, die Sande, die ultrafeinen Teilchen aus Calciumcarbonat eine Korngrößenverteilung aufweisen, dass mindestens drei und höchstens fünf verschiedene Korngrößenklassen vorliegen, wobei das Verhältnis zwischen dem mittleren Durchmesser einer Korngrößenklasse und dem der nächsthöheren Klasse ungefähr 10 ist.

2. Beton nach Anspruch 1, **dadurch gekennzeichnet, dass** die ultrafeinen Teilchen aus Calciumcarbonat ultrafeine Zusätze von Calciumcarbonat sind, die in der Form von kleinen Würfeln kristallisiert sind.

3. Beton nach einem der vorhergehenden Ansprüche, **dadurch gekennzeichnet, dass** der Zement ein Weißzement ist.

4. Beton nach einem der vorhergehenden Ansprüche, **dadurch gekennzeichnet, dass** das Gemisch aus kalzinierten Bauxitsanden besteht aus:
- einem Sand mit einer mittleren Korngröße unter 1 mm, umfassend 20% Granulat mit einer mittleren Abmessung unter 80 Mikrometer,
- einem Sand mit einer Korngröße zwischen 3 und 7 mm, und
- gegebenenfalls einem Sand mit einer Korngröße, umfassend zwischen 1 und 3 mm,
wobei der Sand mit der kleinsten Korngröße ganz oder teilweise ersetzt sein kann durch:
Zement, mineralische Zusätze wie zerkleinerte Schlacke, Flugaschen oder kalzinierter Bauxit-Füllstoff, deren mittlerer Durchmesser kleiner 80 µm ist, was den Anteil von 20 % der Granulate mit einer Abmessung von kleiner als 80 µm betrifft,
- und Sand mit einer Korngröße von über 1 mm, was die andere Fraktion betrifft.

5. Beton nach einem der vorhergehenden Ansprüche, **dadurch gekennzeichnet, dass** die Fasern ausgewählt sind aus Metallfasern, synthetischen, organischen oder mineralischen Fasern und Gemischen davon ausgewählt sind, vorzugsweise aus Homopolymer- oder Copolymerfasern von Polyethylen, Polypropylenpolyamid, Polyvinylalkohol, Kohlefasern, Kevlar^{®} und Stahlfasern.

6. Beton nach Anspruch 5, **dadurch gekennzeichnet, dass** die Fasern Metallfasern, vorzugsweise aus Stahl, sind, mit einer Länge zwischen 5 und 30 mm, vorzugsweise zwischen 10 und 25 mm, und mehr bevorzugt etwa 20 mm und einem Durchmesser von zwischen 0,1 und 1,0 mm, vorzugsweise zwischen 0,2 und 0,5 mm, noch mehr bevorzugt etwa 0,3 mm.

7. Beton nach einem der Ansprüche 1 bis 4, der frei von Silicastaub ist und der in Gewichtsteilen umfasst:
- 100 Zement,
- 80 bis 150, vorzugsweise 100 bis 125 Sandgemische aus kalziniertem Bauxit mit verschiedenen Korngrößen, wobei der feinste Sand eine mittlere Korngröße von weniger als 1 mm und der grobkörnigste Sand eine mittlere Korngröße von weniger als 10 mm aufweist;
- 10 bis 20, vorzugsweise 13 bis 17 ultrafeine Teilchen aus Calciumcarbonat;
- 0,2 bis 5, vorzugsweise 0,5 bis 0,7 Antischaummittel;
- 5-7 Hochleistungsverflüssiger zur Verringerung von Wasser;
- 17 bis 20 Fasern; und
- 10 bis 20, vorzugsweise 16 bis 20 Wasser.

8. Verfahren zur Herstellung eines selbstverdichtenden Ultrahochleistungsbetons nach einem der Ansprüche 1 bis 7, **dadurch gekennzeichnet, dass** alle Bestandteile des Betons geknetet werden bis ein Beton mit einer gewünschten Fließfähigkeit erhalten wird oder dass zuerst die trockenen körnigen Komponenten, wie etwa Zement, die Sande, die ultrafeinen Teilchen aus Calciumcarbonat und gegebenenfalls der Hochleistungsverflüssiger und das Antischaummittel gemischt werden, wonach Wasser, und gegebenenfalls der Hochleistungsverflüssiger, Antischaummittel, wenn diese in flüssiger Form sind, und gegebenenfalls die Fasern, zu dem Gemisch gegeben werden und es geknetet wird, bis ein Beton mit der gewünschten Fließfähigkeit erhalten wird.

9. Trockengemisch für Fertigbeton, das es ermöglicht nach Zugabe von Wasser und gegebenenfalls Fasern sowie Hochleistungsverflüssiger zur Verringerung von Wasser und Antischaummittel, falls diese in flüssiger Form sind, einen Beton nach einem der Ansprüche 1 bis 7 zu erhalten.

10. Verwendung eines Betons nach einem der Ansprüche 1 bis 7 oder hergestellt nach dem Verfahren nach Anspruch 8 zur Herstellung von vorgefertigten Elementen wie Stützen, Träger, Unterzüge, Fußböden, Plattenbelägen, Ingenieurbauwerken, Spannbetonteilen oder Verbundmaterialien, von Trennelementen zwischen Strukturelementen, Elementen für Abwassersysteme oder für Architekturanwendungen.

## Claims

1. A very high-performance self-compacting concrete, having a characteristic 28-day compressive strength of at least 150 MPa, this value being given for a concrete that has been preserved and maintained at 20°C comprising:
- a cement;
- a mixture of calcined bauxite sands of various particle sizes, the finest sand having a mean particle size of less than 1 mm and the coarsest sand having a mean particle size of less than 10 mm;
- ultrafine calcium carbonate particles having a specific surface area of 10 m²/g or more, preferably of 15 m²/g or more and better still around 20 m²/g, and a form factor FF of 0.3 or more, preferably of 0.4 or more,
- a defoamer;
- a water-reducing super plasticizer;
- optionally, fibers; and
- water,
the cements, sands, ultrafine calcium carbonate particles have a particle size distribution such that there are at least three and at most five different particle size classes, the ratio of the mean diameter of one particle size class to that of the class immediately above being about 10.

2. The concrete as claimed in claim 1, **characterized in that** the ultrafine calcium carbonate particles are ultrafine additions of calcium carbonate crystallized in the form of small cubes.

3. The concrete as claimed in any one of the preceding claims, **characterized in that** the cement is a white cement.

4. The concrete as claimed in any one of the preceding claims, **characterized in that** the mixture of calcined bauxite sands is formed by:
- a sand of mean particle size less than 1 mm, which includes 20% of aggregates smaller in size than 80 microns;
- a sand of particle size comprised between 3 and 7 mm; and
- optionally, a sand of particle size comprised between 1 and 3 mm,
it being possible for the sand of smaller particle size to be completely or partly replaced with:
- cement, mineral additions such as ground slag, fly ash or calcined bauxite filler, the mean diameter of which is less than 80 µm, in respect of the 20% fraction of aggregates smaller in size than 80 µm; and
- sand of particle size greater than 1 mm, in respect of the other fraction.

5. The concrete as claimed in any one of the preceding claims, **characterized in that** the fibers are chosen from metal, synthetic, organic or mineral fibers and mixtures thereof, preferably chosen from polyethylene homopolymer or copolymer, polypropylenepolyamide, polyvinyl alcohol, carbon fibers, Kevlar® fibers and steel fibers.

6. The concrete as claimed in claim 5, **characterized in that** the fibers are metal fibers, preferably steel fibers, having a length comprised between 5 and 30 mm, preferably between 10 and 25 mm, and even more preferably around 20 mm, and having a diameter comprised between 0.1 and 1.0 mm, preferably between 0.2 and 0.5 mm, and even more preferably around 0.3 mm.

7. The concrete as claimed in any one of claims 1 to 4, which contains no silica fume and which comprises, in parts by weight:
- 100 of cement;
- 80 to 150, preferably 100 to 125 of mixtures of calcined bauxite sands, of various particle sizes, the finest sand having a mean particle size of less than 1 mm and the coarsest sand having a mean particle size of less than 10 mm;
- 10 to 20, preferably 13 to 17 of ultrafine calcium carbonate particles,
- 0.2 to 5, preferably 0.5 to 0.7 of defoamer;
- 5 to 7 of water-reducing super plasticizer;
- 17 to 20 of fibers; and
- 10 to 20, preferably 16 to 20 of water.

8. A method of preparing the very high-performance self-compacting concrete as claimed in any one of claims 1 to 7, **characterized in that** all the constituents of the concrete are mixed together until a concrete of the desired fluidity is obtained or **in that** the dry granular constituents, such as the cement, the sands, the ultrafine calcium carbonate particles, and optionally the super plasticizer and the defoamer, are firstly blended together, then **in that** the water and optionally the super plasticizer and the defoamer, if these are in liquid form, and optionally the fibers are added to this blend and **in that** these are all mixed until a concrete having the desired fluidity is obtained.

9. A concrete dry ready-mix, making it possible to obtain, after the addition of water, optionally fibers, and water-reducing superplasticizer and defoamer, if these are in liquid form, the concrete as claimed in any one of claims 1 to 7.

10. The use of a concrete as defined in any one of claims 1 to 7 or as prepared using the method of claim 8 for the production of prefabricated elements such as posts, beams, girders, floors, slabs, engineering structures, prestressed pieces or composite components, keystones between structural elements, drain elements, or for architectonic applications.
